Europäisches Patentamt

European Patent Office

Office européen des brevets

(19)

(11) **EP 1 102 422 A1**

(12) **EUROPEAN PATENT APPLICATION**

(43) Date of publication:
23.05.2001 Bulletin 2001/21

(51) Int Cl.7: **H04B 7/26**

(21) Application number: 99500213.6

(22) Date of filing: 16.11.1999

| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(71) Applicant: **Alcatel Espana, S.A.**<br>**28045 Madrid (ES)** | (72) Inventors:<br>• **Lopez Almansa, Eugenio**<br>  **28019 Madrid (ES)**<br>• **Poza Jimenez, Manuel**<br>  **28045 Madrid (ES)** |
| --- | --- |

(54) **Method and system for improving transmission efficiency in TDMA multi-carrier communication systems**

(57)  Method and system for improving transmission efficiency in a TDMA multi-carrier system wherein transmission is carried out in asymmetric connection mode. The transmission is carried out using a plurality of time slots (TS) with the direction of transmission of at least one time slot ($TSD_U$) being reversed. In said reverse transmission time slot ($TSD_U$) at least one signal is spread through a part or a whole bandwidth available in the transmission.

Fig. 3

EP 1 102 422 A1

## Description

The present invention relates to a method and a system for improving transmission efficiency in a TDMA multi-carrier communications system. More particularly, the invention relates to improving the efficiency of transmission in an asymmetrical mode by reducing the effect of interference.

## BACKGROUND OF THE INVENTION

For a better understanding of the background of the invention an example is given in relation to DECT (Digital Enhanced Cordless Telecommunications) which is a known European system, whereas it is to be understood that the field of the invention is not to be limited to DECT.

In a DECT system, voice connections in circuit mode use full-duplex channels of 32 kbps (kilobits per second). This type of connection may also be used for data transmission. However, data transmission requires a better BER (bit error rate) than voice transmission, which can admit rates in the order of $10^{-3}$. By means of error detection and correction procedures it is possible to obtain a BER similar to that of cable networks, although with the trade off of decreasing the bitrate such that it is insufficient for advanced data services.

One way of increasing the bitrate is that of grouping a plurality of full-duplex connections. This type of connections are known as symmetrical multi-carrier connections.

However, certain transmission modes are highly asymmetrical, such as the Web traffic where a significant part of the traffic is in the downlink, i.e. from a remote server to a user terminal such a personal computer. In order to take maximum advantage of transmission capacity in such cases, asymmetric multi-carrier connections are used where in some time slots the direction of transmission is reversed. In such cases, at least one pair of slots is maintained in the full-duplex mode for the sake of signaling in DECT. Using this method it would be possible to reach a rate of up to 552 kbps (23x24 kbps) in the downlink and 24 kbps in the uplink or vice-versa.

The problem associated with the reversing of the direction of transmission is that it causes a base to transmit while other bases are "listening" thus giving rise to considerable interference in the bases located nearby. The problem is even worsened in the case of base stations which are located in the same cell of coverage (it is known in the art that a cell is a geographical area designated for the coverage of a given transmission), said base stations may well be at few meters from one another.

It is therefore desired to provide a method and a system in which while asymmetric multi-carrier connections are used, the effect of interference is substantially reduced.

## DESCRIPTION OF THE INVENTION

In order to overcome the above drawback, the method and system of the present invention for improving transmission efficiency in TDMA multi-carrier communications systems are proposed. According to the invention, signal spreading in asymmetric connections is applied in the slots wherein the transmission is carried out in the reverse direction. The spreading is not done for separating different channels in a slot, but for improving efficiency.

Accordingly, an object of the present invention is that of providing a method for improving transmission efficiency in TDMA multi-carrier systems said system comprising a plurality of base stations wherein the transmission is carried out in asymmetric connection mode comprising a plurality of time slots with the direction of transmission of at least one time slot being reversed, characterized in that at least one signal transmitted in said reverse transmission time slot is spread through a bandwidth available in the transmission.

According to one aspect of the invention, said reverse transmission time slot is spread throughout the whole bandwidth

According to another aspect of the invention, said reverse transmission time slot is spread through a part of said bandwidth.

According to another aspect of the invention, at least one signal in the asymmetric downlink transmission is spread throughout a whole bandwidth available in the transmission.

Another object of the invention is that of providing a transmission system comprising a plurality of base stations wherein the transmission is carried out in asymmetric connection mode comprising a plurality of time slots with at least one time slot having the direction of transmission reversed, characterized in that the system is adapted for spreading at least one signal transmitted in said reverse transmission time slot throughout a whole bandwidth available in the transmission.

A further object of the invention is that of providing a base station capable of carrying out transmission in asymmetric connection mode, said transmission comprising a plurality of time slots with at least one time slot having the direction of transmission reversed, characterized in that said base station is adapted for spreading at least one signal transmitted in said reverse transmission time slot throughout a whole bandwidth available in the transmission.

A still further object of the invention is that of providing a receiver means capable of receiving transmission in asymmetric connection mode, said transmission comprising a plurality of time slots with at least one time slot having the direction of transmission reversed, characterized in that said receiver means is adapted for despreading at least one signal transmitted in said reverse transmission time slot, said signal being spread throughout a whole bandwidth available in the transmission.

An additional object of the present invention is that of providing a TDMA transmission system using frequency division duplex or time division duplex having spreading code assigned to a base station (BS).

Also an additional object of the present invention is that of providing a TDMA transmission system using frequency division duplex or time division duplex having spreading code assigned to a receiving station.

In this manner, it is possible to reduce interference caused by transmission of a base station in the remaining non-transmitting base stations of a communications system, the reduction being in a proportion substantially equal to the spreading factor, or the so called processing gain.

### BRIEF DESCRIPTION OF THE DRAWINGS

Figure 1 is a representation of a frame of multi-carrier asymmetric connection with downlink and uplink time slots.

Figure 2 is a schematic diagram of a communications cell having six sectors with a base station in each one of the sectors.

Figure 3 is a representation in terms of power per frequency ratio vs. frequency in the whole bandwidth including a spread spectrum.

### DESCRIPTION OF A PREFERRED EMBODIMENT

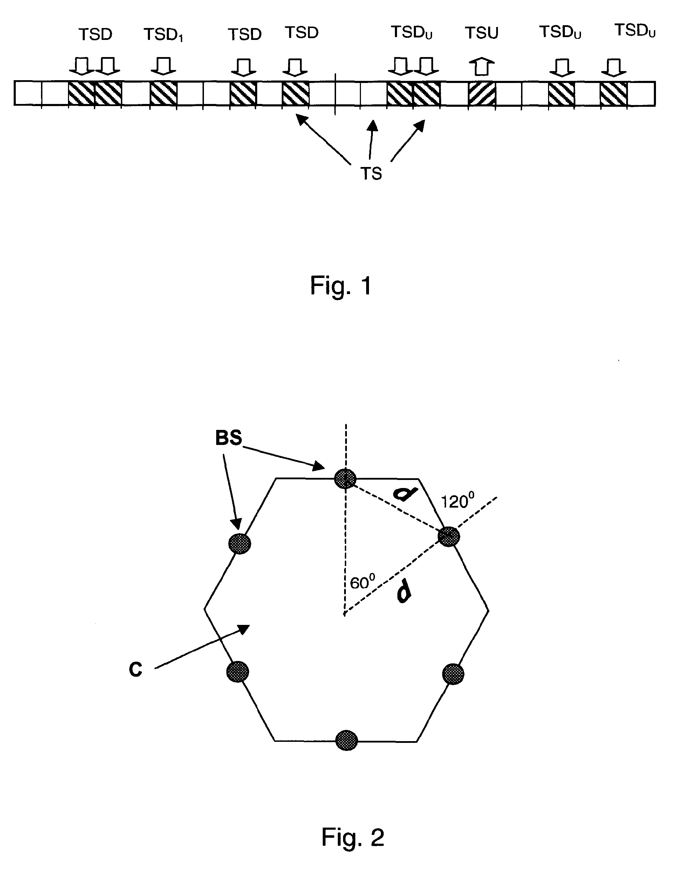

Figure 1 shows a frame structure comprising a plurality of time slots TS, for asymmetric multi-carrier connections. It is to be noted that this frame structure is represented only in an exemplary manner, without causing any limitation in the scope of the invention. It may be observed from the figure that there are a total of 24 time slots TS. The normal arrangement of such a frame structure would be based on 12 time slots for the downlink, which are represented by the time slots on the left half of the frame of figure 1, and 12 time slots for the uplink which are represented by the time slots on the right half of the farme. In the particular example shown in the figure there are four time slots $TSD_U$ which although are located in the right half (uplink part) of the frame, are reversed in their direction of transmission, and thus may be used for downlink transmission. Therefore, the frame represent a total of 9 time slots TSD, $TSD_1$, $TSD_U$ transmitted in the downlink direction, and one time slot TSU is transmitted in the uplink direction. Further in the example shown in the figure, TSU forms, together with a corresponding downlink time slot $TSD_1$ what is known as a full-duplex structure. With this arrangement, the frame of figure 1 provides an asymmetric multi-carrier connection and is suitable for traffic of packages of data such as for example in the case of the Internet data transmission. According to the structure represented in the figure, the downlink bitrate is of 216 kbps (9 downlink time slots x 24 kbps) whereas the uplink time slot provides a bitrate of only 24 kbps. In the figure it is further appreciated that there are available a total of 24 time slots, from which 23 may be used in one direction, e.g. in the downlink, thus providing the possibility of a bitrate of up to 552 kbps (23 time slots x 24 kbps).

The above known frame structure with a determined number of time slots $TSD_U$ having the direction of transmission reversed, is used in the present invention. However, in the known methods each base station transmits the reverse time slots in the frequency band assigned to said base station, thus giving rise to considerable interference with the adjacent base stations or those nearby which receive the transmission in the same frequency, or in adjacent frequencies; whereas in the process proposed by the invention the signal transmitted in the reverse transmission time slot is spread throughout the whole or a part of the bandwidth available.

Again, the invention will be better understood using an example of transmission under the DECT system. In DECT, the asymmetric connections are established according to the requirements of the terminal. A full-duplex connection is usually started for facilitating a bidirectional communication. In figure 2 a DECT communications cell is represented having six sectors corresponding to the six sides of the hexagon as shown in the figure. In each sector a base station BS is located. In such arrangement, the interference signal received in the same frequency by each base station BS is represented by the following relationship:

$$S_{dB} = 24\ dB + dB_{A1} + dB_{A2} - 38 - 20 \cdot log(d)$$

where 24 dB is the transmission power which corresponds to a power in the order of 250 mW approximately, $dB_{A1}$ and $dB_{A2}$ represent the gain in antennas of the transmitting base station and the receiving base station respectively and d is the distance between the base stations BS. Values 38 and 20 represent line of sight values. In this particular example, assuming use is made of antennas of 15 dB each, with an angle of 120º, the corresponding values of $dB_{A1}$ and $dB_{A2}$ are in the order of -15 dB (the antenna diagram provides in the order of -30 dB at 120º angle). Assuming that d = 1 meter, the interference is calculated as follows:

$$S_{dB} = 24 \text{ dB} -15 \text{ dB} -15 \text{ dB} - 38 \text{ dB} = -44 \text{ dB}$$

This corresponds to a power of 400 nW, and is only 10 dB below the saturation power of DECT, which is -33 dB. Usually a preferred signal to noise relationship is of 10 dB, thus requiring that a signal is reached at the receiving side with a power of -34 dB. This is almost the saturation power, thereby causing malfunction in the system.

The present invention proposes the use of the whole or a part of the bandwidth available (for example in DECT corresponding to 10 frequencies), by means of spreading the signal in the time slots in which it is transmitted in the reverse direction. The spreading technique to be employed is known to a person skilled in the art, example of which is taught in the widely known CDMA technique.

However, it is to be noted that although the spreading technique proposed in the present invention is based on known techniques such as that of CDMA, the invention must not be construed as related to a CDMA system, as it does not require the use of any of the other features of CDMA such as allocating coded signals of various users in one and the same time slot. Nor does the present invention provide multiple access based on spreading procedures. Consequently the associated hardware is also different, and it may be implemented in systems such as DECT without implying use of a CDMA system.

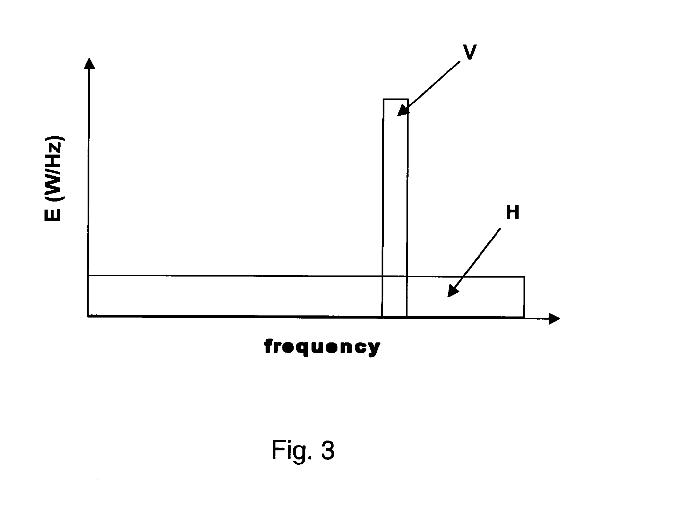

Thus by using more bandwidth, the ratio watts/Hz becomes lower as a function of the spreading factor. Figure 3 shows this effect. In a first approximation, in the DECT example, the use of spreading would cause a reduction in interference of up to 10 dB (there are 10 frequencies), which permits avoiding saturation. However in practice, the reduction may be even higher, up to 12 dB, as it is described below.

If the carrier frequencies are separated by 1728 kHz, which is a standard value in DECT, only 1152 kHz is actually being used, thus in a transmission power of 250 mW the power to frequency ratio E is 217 nW/Hz (250 mW/ 1152 kHz). This is represented by the vertical column V of figure 3.

Now, if as a consequence of spreading the whole bandwidth is used, the relationship can be expressed as follows:

$$\frac{250\,mW}{10 X 1728\,Hz} = 14.5 nW / Hz$$

This is represented by the horizontal section H of figure 3. Therefore, in this manner an extra reduction of 12 dB may be obtained due to spreading ($10 \cdot log(217/14.5)$), which brings about an overall value of -56 dB for $S_{dB}$.

With these figures it would be possible to calculate a maximum distance for a DECT terminal so that a base station with this interference can receive its transmission adequately. Assuming that the antenna of the terminal has a gain of 15 dB, being suitably oriented, the received signal at the base station would be expressed as follows:

$$S_{dB}=24 \text{ dB} +15 \text{ dB} +15 \text{ dB} - 38dB - [20.log(d)] \text{ dB}=16 \text{ dB} - [20.log(d)] \text{ dB}$$

Now assuming a signal to noise ratio of at least 10 dB, and an interference of -56 dB, the signal from the terminal must be reduced at most to a value of -46 dB, which when applied to the above equation yields a maximum distance over 1 kilometer which is reasonable. The calculation is as follows:

$$-46 \text{ dB}= 16 \text{ dB} - 20 \cdot log(d),$$

thus

$$log(d) = 62bB/20 = 3.1,$$

therefore

$$d \cong 1000 \text{ m}$$

Furthermore, spreading can permit working with lower power values. For example in CDMA the value of 50 mW is conventional, whereby the reduction would be almost 19 dB, thus permitting a maximum distance of almost 9 km.
Another advantage of using the whole bandwidth is an increase in the bitrate. In the case of DECT systems, 1152 kbps is transmitted in a determined band during 364.6 µs. In this time 420 bits are transmitted. Considering now that the same time duration and a spreading factor of 10 are employed, if the whole bandwidth is used, 1728 kbps are transmitted, which implies the transmission of 630 bits of information in one time slot, and an increase of the bitrate up to 150% of its initial value.
In practice, when spreading codes are being used for the spreading procedure of the present invention, only one code would be necessary, because in each base station only one channel would be transmitting at a time. This spreading code is conveniently selected and is orthogonal or quasi-orthogonal, to the respective spreading codes of other base stations located nearby, in order to reduce interference between simultaneous asymmetric transmissions.
At the receiving side, a receiver means would receive the transmission in asymmetric downlink connection mode in which the time slot (TSU) with reversed direction of transmission carries a signal, which is spread throughout the whole bandwidth of the transmission. Once the signal is received at the receiver means, said signal is despread for further processing as conventionally employed.

**Claims**

1. Method for improving transmission efficiency in a TDMA multi-carrier system said system comprising a plurality of base stations (BS) wherein transmission is carried out in asymmetric connection mode comprising a plurality of time slots (TS) with the direction of transmission of at least one time slot ($TSD_U$) being reversed, characterized in that at least one signal transmitted in said reverse transmission time slot ($TSD_U$) is spread through a bandwidth available in the transmission.

2. Method according to claim 1, characterized in that said reverse transmission time slot is spread throughout the whole bandwidth available in the transmission.

3. Method according to claim 1, characterized in that said reverse transmission time slot is spread through a part of said bandwidth.

4. Method according to claim 1, characterized in that at least one signal in the asymmetric downlink transmission is spread throughout a whole bandwidth available in the transmission.

5. A transmission system for carrying out the method of claim 1, comprising a plurality of base stations (BS) wherein transmission is carried out in asymmetric connection mode comprising a plurality of time slots (TS) with at least one time slot ($TSD_U$) having the direction of transmission reversed, characterized in that the system is adapted for spreading at least one signal transmitted in said reverse transmission time slot ($TSD_U$) through a bandwidth available in the transmission.

6. A base station for carrying out the method of claim 1, capable of carrying out transmission in asymmetric connection mode, said transmission comprising a plurality of time slots (TS) with at least one time slot ($TSD_U$) having the direction of transmission reversed, characterized in that said base station (BS) is adapted for spreading at least one signal transmitted in said reverse transmission time slot ($TSD_U$) through a bandwidth available in the transmission.

7. A receiver means capable of receiving transmission in asymmetric connection mode, said transmission comprising a plurality of time slots (TS) with at least one time slot ($TSD_U$) having the direction of transmission reversed, characterized in that said receiver means is adapted for despreading at least one signal transmitted in said reverse transmission time slot ($TSD_U$), said signal being spread through a bandwidth available in the transmission.

8. A TDMA transmission system using frequency division duplex or time division duplex having spreading code assigned to a base station (BS).

9. A TDMA transmission system using frequency division duplex or time division duplex having spreading code assigned to a receiving station.

Fig. 1

Fig. 2

Fig. 3

**European Patent Office**

# EUROPEAN SEARCH REPORT

Application Number

EP 99 50 0213

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 932 267 A (MITSUBISHI ELECTRIC CORP) 28 July 1999 (1999-07-28) * column 13, line 5 – column 15, line 29 * * figure 3 * | 1-9 | H04B7/26 |
| X | EP 0 948 221 A (MATSUSHITA ELECTRIC IND CO LTD) 6 October 1999 (1999-10-06) * column 1, line 1 – column 2, line 41 * * column 6, line 28 – column 8, line 18 * * figure 3 * | 1-9 | |
| A | PARADELLS J ET AL: "DECT MULTIBEARER CHANNELS" PROCEEDINGS OF THE VEHICULAR TECHNOLOGY CONFERENCE,US,NEW YORK, IEEE, vol. CONF. 44, 1994, pages 696-700, XP000496764 * page 696, right-hand column, line 3 – line 10 * * page 697, left-hand column, line 4 – right-hand column, line 3 * * figure 2; table 1 * | 1-9 | |
| A | ORTIGOZA-GUERRERO L ET AL: "Capacity assessment for UTRA" 1999 IEEE 49TH VEHICULAR TECHNOLOGY CONFERENCE (CAT. NO.99CH36363), 1999 IEEE 49TH VEHICULAR TECHNOLOGY CONFERENCE. MOVING INTO A NEW MILLENIUM, HOUSTON, TX, USA, 16-20 MAY 1999, pages 1653-1657 vol.2, XP002134005 1999, Piscataway, NJ, USA, IEEE, USA ISBN: 0-7803-5565-2 * page 1653, right-hand column, line 12 – line 24 * * page 1654, left-hand column, line 21 – right-hand column, line 29 * | 1-9 | TECHNICAL FIELDS SEARCHED (Int.Cl.7) H04B H04L |

The present search report has been drawn up for all claims

| Place of search | Date of completion of the search | Examiner |
|---|---|---|
| THE HAGUE | 27 March 2000 | Larcinese, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**

EP 99 50 0213

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2000

| Patent document cited in search report | | Publication date | Patent family member(s) | | Publication date |
|---|---|---|---|---|---|
| EP 0932267 | A | 28-07-1999 | WO | 9909680 A | 25-02-1999 |
| EP 0948221 | A | 06-10-1999 | JP | 11261544 A | 24-09-1999 |
| | | | CN | 1233117 A | 27-10-1999 |

EPO FORM P0459

For more details about this annex : see Official Journal of the European Patent Office, No. 12/82